(19) Europäisches Patentamt
European Patent Office
Office européen des brevets

(11) **EP 1 683 298 B1**

(12) **EUROPEAN PATENT SPECIFICATION**

(45) Date of publication and mention
of the grant of the patent:
**17.09.2008 Bulletin 2008/38**

(21) Application number: **04770350.9**

(22) Date of filing: **02.11.2004**

(51) Int Cl.:
$H04L\ 9/32^{(2006.01)}$  $H04L\ 9/08^{(2006.01)}$

(86) International application number:
**PCT/IB2004/052259**

(87) International publication number:
**WO 2005/043808 (12.05.2005 Gazette 2005/19)**

(54) **METHOD AND DEVICE FOR EFFICIENT MULTIPARTY MULTIPLICATION**

VERFAHREN UND EINRICHTUNG ZUR EFFIZIENTEN MEHRTEILNEHMER-VERVIELFACHUNG

METHODE ET DISPOSITIF EFFICACES DE MULTIPLICATION A PARTENAIRES MULTIPLES

(84) Designated Contracting States:
**AT BE BG CH CY CZ DE DK EE ES FI FR GB GR HU IE IS IT LI LU MC NL PL PT RO SE SI SK TR**

(30) Priority: **03.11.2003 EP 03078437**

(43) Date of publication of application:
**26.07.2006 Bulletin 2006/30**

(73) Proprietor: **Koninklijke Philips Electronics N.V.**
**5621 BA Eindhoven (NL)**

(72) Inventors:
• **TUYLS, Pim, T.**
**NL-5656 AA Eindhoven (NL)**
• **SCHOENMAKERS, Berry**
**NL-5656 AA Eindhoven (NL)**

(74) Representative: **Groenendaal, Antonius W. M.**
**Philips**
**Intellectual Property & Standards**
**P.O. Box 220**
**5600 AE Eindhoven (NL)**

(56) References cited:
**WO-A-01/20562**    **WO-A-03/077470**

• **R. CRAMER, I.B. DAMGARD, J. B. NIELSEN: "Multiparty Computation from Threshold Homomorphic Encryption" BASIC RESEARCH IN COMPUTER SCIENCE, [Online] June 2000 (2000-06), pages 1-38, XP002319282 DENMARK ISSN: 0909-0878 Retrieved from the Internet: URL:http://citeseer.ist.psu.edu/cache/pape rs/cs/24589/http:zSzzSzwww.brics.dkzSzRSzS z00zSz14zSzBRICS-RS-00-14.pdf/cramer00mult iparty.pdf> [retrieved on 2005-02-25]**
• **M. HIRT, K. SAKO: "Efficient Receipt-Free Voting Based on Homomorphic Encryption" EUROCRYPT 2000, [Online] 2000, pages 1-18, XP002319283 SWITZERLAND Retrieved from the Internet: URL:http://citeseer.ist.psu.edu/cache/ pape rs/cs/20658/ftp:zSzzSzftp.inf.ethz.chzSzpu bzSzpublicationszSzpaperszSztizSzisczSzwww isczSzHirSak00.pdf/hirt00efficient.pdf> [retrieved on 2005-02-25]**

**Description**

The invention relates to a method for a party participating in a secure multiparty multiplication protocol between participants, a device being arranged for implementing this method, and a computer program product having computer executable instructions for causing a programmable device to perform this method.

Secure multiparty computation is the process where a number of participants compute a function *f* to obtain an unencrypted output. During the computation, only the output becomes available to the participants.

Some well known examples of these kind of computations are auctions, the Millionaires problem, secure function evaluation, voting, crypto computing with rational and secure profile matching.

Homomorphic threshold cryptosystems provide a basis for secure multiparty computation. For a given *n*-ary function *f*, a circuit of elementary gates is composed that, given encryptions of $x_1,...,x_n$ on its input wires, produces an encryption of $f(x_1,...,x_n)$ on its output wire. The elementary gates operate in the same fashion. The wires of the entire circuit are all encrypted under the same public key; the corresponding private key is shared among a group of parties.

The elementary gates operate on bits or on elements of larger domains (rings or fields), where apparently the latter type is preferred from an efficiency point of view.

A basic tool in the toolbox for computing under the encryption, is a secure multiplication protocol. And although addition gates can be evaluated without having to decrypt any value, taking full advantage of the homomorphic property of the cryptosystem, multiplication gates, however, requires at least one threshold decryption to succeed.

In US patent 6,772,339, a method is described for secure multiparty computation comprising: generating a data set based on a function to be computed, said data set comprising pairs of first data and second data; for each pair of first data and second data, encrypting said first data and said second data; mixing pairs of encrypted first data and second data; comparing encrypted input data with said encrypted input data to detect a match; and selecting encrypted second data corresponding to said detected match.

The resulting protocol for evaluating multiplication gates is, despite its conceptual simplicity, quite inefficient.

Cramer et al.: "Multiparty computation from threshold homomorphic encryption", Basic Research in Computer Science, 2000, pages 1-38, XP002319282, discloses an approach to multiparty computation basing it on homomorphic threshold cryptosystems. It requires that from an encryption of a and a constant $\alpha \in R$, it is easy to compute a random encryption of $\alpha a$. It assumes availability of a sub-protocol to prove that a multiplication is correct. The sub-protocol assumes that Pi is given an encryption of a, chooses a constant $\alpha$, computes a random encryption of $\alpha a$ and broadcasts an encryption of $\alpha$ and an encryption of $\alpha a$. Under these assumptions, the assumed a sub-protocol gives a zero-knowledge proof that indeed the encryption of $\alpha a$ contains the product of the values contained in the encryption of $\alpha$ and the encryption of a.

WO 01/20562 A2 shows that the ElGamal cryptosystem is strongly homomorphic.

It is therefore an object of the invention to provide a method and a device that provide an efficient building block for multiparty computations, in particular for the multiplication protocol.

The object of the invention is achieved by a method for a party participating in a secure multiparty multiplication protocol between participants, the protocol being arranged to compute the product of private first data and encrypted second data, wherein the protocol comprises a subprotocol comprising the steps of -the party obtaining first data*)*, which is either -private first data or -first data from a two-valued domain, -the party obtaining encrypted second data, -the party computing encrypted output data which comprises a randomized encryption of the product of the first data and the second data, using a discrete log based cryptosystem, and -the party generating a proof being arranged to show that the encrypted output data is correct.

A multiplication protocol takes as input a private or encrypted multiplier x and an encrypted multiplicand *y* and produces in polynomial time as output an encryption of the product *xy*. The protocol should not leak any information on *x, y*, and *xy*. Furthermore, for security reasons it is required that the protocol generates a publicly verifiable proof that the product is computed directly.

According to the method according to the invention, and given private or encrypted first data $[[x]] = (a, b) = (g^r, g^x h^r)$ and encrypted second data $[[y]] = (c, d)$, where party $P$ knows $r, x$, party $P$ computes a randomized encryption $[[xy]] = (e, f) = (g^s, h^s) * [[y]]^x$, with $s \in _R Z_q$, using the homomorphic properties of the discrete log based cryptosystem. The Party P also generates a proof showing that the output is correct, which means that it proves knowledge of witnesses $r; s; x \in Z_q$ satisfying $a = g^r, b = g^x h^r, e = g^s c^x, f = h^s d^x$.

The method allows to implement applications efficiently, for example the method allows at least two users to compare their private data without revealing any other information than whether they are similar or not, according to some measure.

It is a further advantage of such a discrete log based solution that distributed key generation for the threshold version is relatively simple.

It is an additional advantage that the method also addresses treating the malicious case and addresses fairness for the two-party case.

It is a further advantage that the invention performs particularly well for ad hoc contacts among a large group of peer users, where it is important that each user needs only a limited amount of set-up information (independent of the total number of users), and the total time of execution---including the time for distributed key generation---for running a protocol between any two users is limited as well.

The method of the multiplication protocol requires that one of the multipliers is private, that is, known by a single party.

This restriction allows the multiplication protocol to exist under the Diffie-Hellman assumption.

An advantageous method according to the invention is characterized in that the first data is random data from a two-valued domain.

The method allows at least two users to obtain the product of two numbers, one of which is a random number from a two-valued domain, and a proof that the result was correctly computed.

The method implements a protocol which enables to compute the encrypted product of two encrypted numbers.

In the protocol according to claim 2, which is referred to as the conditional gate, the multiplier x is from a dichotomous (two-valued) domain. This restriction allows the multiplication protocol to exist under the Diffie-Hellman assumption. It is realized by the inventors that elementary gates operating on bits are sufficient for efficiently implementing multiparty computations including multiplication.

The protocol according to claim 2 is able to efficiently multiply the encrypted values $x$ and $y$, if $x$ is restricted to a two-valued domain.

An advantageous method according to the invention is characterized in that the discrete log based cryptosystem is the ElGamal cryptosystem.

It is understood by the inventors that basically homomorphic ElGamal suffices for efficiently handling a wide range of problems. The encryptions of second data, are homomorphic ElGamal encryptions, where it is understood that these encryptions are randomized and the public key for these encryptions is always the same. The corresponding private key is shared among a number of parties.

It is an advantage that the current method works under the standard Decision Diffie-Hellman assumption using just homomorphic threshold ElGamal encryption, which is far less costly than for example the use of RSA-like cryptosystems such as Paillier's cryptosystem, as the generation of a shared RSA modulus for the corresponding threshold cryptosystems is costly, often dominating the cost of an entire application. Even for the two-party case, sharing an RSA modulus is a non-trivial task. In contrast, distributed key generation for discrete log based cryptosystems is simple, and practically for free in the two-party case.

As an additional advantage, ElGamal allows for solutions based on any discrete log setting, such as elliptic curves or XTR.

The work for each party for evaluating a conditional gate amounts to about 12 exponentiations, whereas the Mix and Match approach from the aforementioned US patent requires approximately 150 exponentiations for a similar multiplication gate, as each party needs to blind and permute the 4x3 ElGamal encryptions constituting the encrypted truth table of the gate and provide a proof of correctness; each party must also take part in four plaintext-equality tests, on average.

The method according to the current invention is therefore probably the most efficient solution to date for Yao's millionaires problem and many other problems, such as secure auctions.

An advantageous method according to the invention is characterized in that the encrypted data are Pederson commitments.

Often a slight optimization is possible by using a Pedersen commitment $<<x>> = g^x h^r$ instead of an ElGamal encryption $[[x]] = (g^r, g^x h^r)$ for the multiplier.

An advantageous method according to the invention is characterized in that the protocol comprises the further step of -the party transmitting the proof to at least one of the other participants,

An advantageous method according to the invention is characterized in that the protocol comprises the further step of -the party transmitting the encrypted output data to at least one of the other participants,

An advantageous method according to the invention is characterized in that the protocol is executed between two parties.

The object of the invention is further achieved by a device being arranged for implementing the method according to claim 1.

The object of the invention is further achieved by a computer program product, for enabling multiparty computations, having computer executable instructions for causing a programmable device to perform the method according to claim 1.

Fig. 1 illustrates a subprotocol of the multiplication protocol, and
Fig. 2 shows a device for implementing the method according to the invention.

A multi-party multiplication protocol is a protocol carried out by two or more participants.

The input of the protocol consists of two (possibly encrypted) numbers, $x$ and $y$. The number x can be provided by player $P_1$ and $y$ can be provided by player $P_2$. At the end of the protocol, both players get the product $[[xy]]$ as a result. Moreover the parties get a proof that the result was correctly computed and that the other player(s) did not cheat.

First some preliminaries for the computations are discussed.

Let $G=<g>$ denote a finite cyclic (multiplicative) group of prime order $q$ for which the Decision Diffie-Hellman (DDH) problem is assumed to be infeasible.

For public key $h \in G$, additively homomorphic

ElGamal encryption is used, where message $m \in Z_q$ is encrypted as a pair $(a,b)=(g^r, g^m h^r)$, with $r \in Z_q$. The homomorphic property is that component wise multiplication of encryptions of $m$ and $m'$, respectively, yields an encryption of $m+m'$ (modulo $q$): $(a,b)*(a',b') = (aa',bb') = (g^{r+r'}, g^{m+m'} h^{r+r'})$.

Given an encryption $(a,b)=(g^r, g^m h^r)$ as common input, standard techniques yield a proof of knowledge for showing knowledge of the (unique) witness $(m, r)$. (Standard ElGamal encryption with encryptions of the form $(g^r, m h^r)$ for $m \in G$ is homomorphic in a multiplicative sense but lacks such a proof of knowledge.)

An equivalence relation is defined on $G \times G$ by stating that encryptions $(a,b)$ and $(a',b')$ are equivalent iff $log_g (a/a') = log_h(b/b')$. Using $(l,g^m)$, $m \in Z_q$, as canonical representatives, $[[m]]$ is used to denote the equivalence class of $(l,g^m)$. In other words, $[[m]]$ denotes the set of all ElGamal encryptions of $m$ (under public key $h$). The operations on the direct product group $G \times G$ are lifted to the equivalence classes in the usual way. The homomorphic property then implies that $[[x]] * [[y]] = [[x+y]]$ and $[[x]]^c = [[cx]]$.

Thus addition and multiplication by a scalar are easily accomplished. These operations can easily be verified when implemented in a deterministic fashion.

Randomization (or blinding) of ElGamal encryptions is an important primitive as well. This amounts to multiplying a given encryption with a random element $(a,b) \in_R [[0]]$. Proving that $log_g a = log_h b$ shows that $(a, b)$ is indeed an encryption of $0$.

Given the private key $\alpha=log_g h$, decryption is performed by calculating $b/a^\alpha$, which is equal to $g^m$ for some $m \in Z_q$. Recovering $m$ from $g^m$ is supposed to be hard in general, hence it is necessary to view this cryptosystem with respect to a set $M \in Z_q$ of sufficiently small size such that finding $m$ from $g^m$ is feasible whenever $m \in M$. In the current invention, however, the size of $M$ will be very small, often $|M|=2$.

The ElGamal cryptosystem is semantically secure under the DDH assumption.

In a $(t,n)$-threshold version of ElGamal, $1 \leq t \leq n$, encryptions are computed w.r.t. a common public key $h$ (as above) while decryptions are done using a joint protocol between $n$ parties, each party possessing a share of the private key $\alpha = log_g h$. As long as at least $t$ parties take part, decryption will succeed, whereas fewer than $t$ parties are not able to decrypt successfully. The parties obtain their share by running a distributed key generation protocol.

Since the invention is particularly of interest to two-party computations, more details are presented for the $(2,2)$-threshold scheme. Distributed key generation is achieved by having parties $P_1$, $P_2$ first broadcast commitments $c_i = g^{\alpha_i}h^{r_i}$, with $\alpha_i, r_i \in Z_q$ for $i=1,2$, and then broadcast the values $r_i$ along with proofs of knowledge of $log_g h_i$, where $h_i = c_i/h^{r_i}$ for $i=1,2$. The joint public key is $h = h_1 h_2$, with private key $\alpha = \alpha_1 + \alpha_2$. To decrypt an encryption $(a,b)$, player $P_i$ produces $d_i = a^{\alpha_i}$, along with

a proof that $log_a d_i$ is equal to $log_g h_i$. The message is then recovered from $b/(a_1 a_2)$.

Clearly, $(2,2)$-threshold ElGamal allows for ad-hoc use. The effort for generating the keys is about the same as the effort for performing a decryption.

Given two homomorphic encryptions $[[x]],[[y]]$ the homomorphic encryption $[[xy]]$ can be computed by the protocol comprising the following steps:

- Player $P_i$ chooses a random value $r_i$ and sends $[[r_i]]$ to player $P_{3-i}$ along with a proof that it knows $r_i$, for $i=1,2$.
- The players jointly decrypt $[[x+r_1+r_1]]$.
- Let $x_1 = x+r_2$, $x_2 = -r_2$. Player $P_i$ sends $[[x_i]]$, $[[f_i]]=x_i [[ b ]]$ to player $P_{3-i}$ along with a proof, for $i=1,2$.
- Both players may compute $[[f_1]]+[[f_2]] = [[xy]]$.

If any of the proofs fails, the protocol is aborted.

As a last preliminary, the Pedersen Commitment is shown. Given $g,h \in G$, a commitment to message $m \in Z_q$ is a value $c = g^m h^r$, with $r \in_R Z_q$. The commitment is opened by revealing $m$ and r. Pedersen's scheme is unconditionally hiding and computationally binding, under the assumption that $log_g h$ cannot be determined. The commitment scheme is also additively homomorphic, and $<<m>>$ will be used to denote a commitment to message $m$, where the randomization is suppressed.

According to these preliminaries, a function f can be evaluated securely in a multiparty setting if $f$ can be represented as a circuit over $Z_q$ consisting only of addition gates and simple multiplication gates. An addition gate takes encryptions $[[x]]$ and $[[y]]$ as input and produces $[[x]] * [[y]] = [[x + y]]$ as output, and a simple multiplication gate takes $[[x]]$ as input and produces $[[x]] c = [[cx]]$ as output, for a publicly known value $c \in Z_q$. To be able to handle any function f, however, there is a need for more general multiplication gates for which both inputs are encrypted.

If no restrictions are put on x or y, a multiplication gate, taking [[x]] and [[y]] as input and producing [[xy]] as output efficiently, cannot exist assuming that the DH problem is infeasible. Therefore, a special multiplication gates is used, putting some restrictions on the multiplier x.

In a first embodiment of the invention, the method requires that the multiplier x is private, which means that it is known by a single party.

In a second embodiment of the invention, the method comprises the use of a special multiplication gate. This gate, referred to as the conditional gate, requires that the multiplier x is from a dichotomous (two-valued) domain. This protocol will be referred to as a multiplication protocol with a shared dichotomous multiplier. This protocol is less general but far more efficient than the protocols already known.

Despite these restrictions, the method according to the invention leads to very efficient multiparty protocols.

First, in the first embodiment according to the invention, a multiplication protocol is presented where the multiplier x is a private input (rather than a shared input). That is, the value of *x* is known by a single party *P*. No restriction is put on the multiplicand *y*. Multiplication with a private multiplier occurs as a subprotocol in the protocol for the conditional gate, and in a number of separate other protocols.

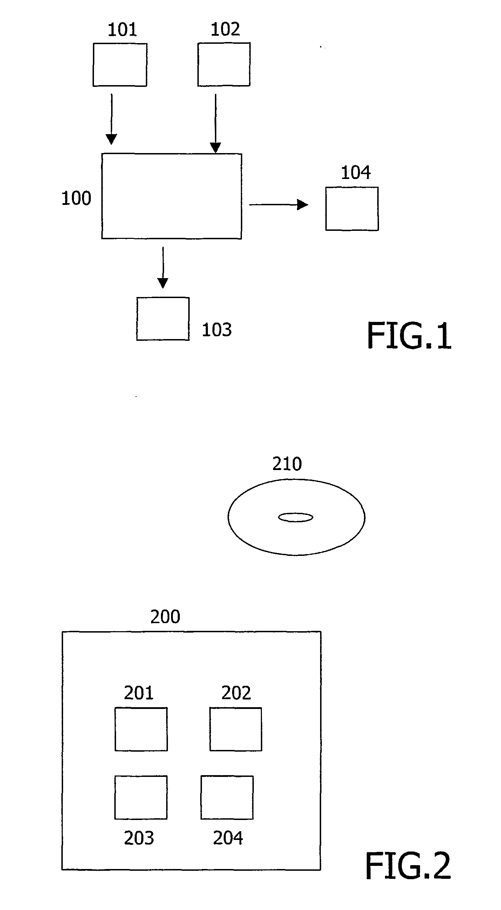

Fig. 1 illustrates two different embodiments of the invention. Party P, 100, obtains private first data, *[[x]]*, 101, and encrypted second data, *[[y]]*, 102, computes encrypted output data, *[[xy]]*, 103, including a correctness proof 104. Obtaining can be either receiving from a different party, retrieving from internal memory, or generating internally.

Given encryptions $[[x]] = (a, b) = (g^r, g^x h^r)$ and $[[y]] = (c, d)$, where party *P* knows $r, x$, party *P* computes on its own a randomized encryption $[[xy]] = (e, f) = (g^s, h^s) * [[y]]^x$, with $s \in_R Z_q$, using the homomorphic properties. Party *P* then broadcasts *[[xy]]* along with a proof showing that this is the correct output, which means that it proves knowledge of witnesses $r; s; x \in Z_q$ satisfying $a = g^r, b = g^x h^r, e = g^s c^x, f = h^s d^x$.

For later use, the above protocol needs to be simulated. The simulator gets as input *[[x]]* and *[[y]]*, and a correct output encryption *[[xy]]*, but it does not know x. As a result, the simulator only needs to add a simulated proof of knowledge. The simulated transcript is statistically indistinguishable from a real transcript.

It is possible to use a variation of the above protocol, where the private multiplier x is multiplied with several multiplicands $y_i$ at the same time. Furthermore, a slight optimization is possible by using a Pedersen commitment $<<x>> = g^x h^{tr}$ instead of an ElGamal encryption $[[x]] = (g^r, g^x h^r)$ for the multiplier.

In the second embodiment of the invention, the conditional gate is used as a special type of multiplication gate that can be realized in a surprisingly simple and efficient way using just standard homomorphic threshold ElGamal encryption. As addition gates are essentially for free, the conditional gate not only allows for building a circuit for any function, but actually yields efficient circuits for a wide range of tasks.

The dichotomous domain *{-1,1}* is convenient for explanation purposes. Domain *{0,1}* or any other domain $\{a,b\}, a \neq b$, can be used instead, as these domains can be transformed into each other by linear transformations. These transformations can also be applied to encryptions.

The conditional gates will be illustrated along two different protocols.

In the first protocol to implement the conditional gate, the protocol enables players $P_1, ... ,P_N, N \geq 2$, to compute an encryption [[xy]] securely. For simplicity, it is assumed that the players also share the private key of the homomorphic encryption scheme *[[.]]*.

In protocol stage 1: for *i=1..N*, player $P_i$ takes $[[x_{i-1}]]$ as input and chooses $s_i \in_R \{-1,1\}$. Player $P_i$ broadcasts encryptions $[[s_i]]$ and $[[s_i x_{i-1}]]$, and a proof that $[[s_i x_{i-1}]]$ is correct w.r.t. $[[s_i]]$ and $[[x_{i-1}]]$, using the protocol for multiplication with a private multiplier. Let $x_i = s_i x_{i-1}$.

In protocol stage 2: the players jointly decrypt $[[x_N]]$ to obtain $x_N$. Each player checks that $x_N \in \{-1,1\}$. Given $x_N$ and $[[y]]$, the encryption $[[x_N y]]$ is computed publicly. Let $z_0 = x_N y$.

In protocol stage 3: for *i=1..N*, player $P_i$ takes $[[z_{i-1}]]$ as input and broadcasts an encryption $[[s_i z_{i-1}]]$, and a proof that $[[s_i z_{i-1}]]$ is correct w.r.t. $[[s_i]]$ and $[[z_{i-1}]]$, using the protocol for multiplication with a private multiplier. Let $z_i = s_i z_{i-1}$.

The output of the protocol is $[[z_N]] = [[xy]]$. The protocol requires a single threshold decryption only. Since $x_N \in_R \{-1,1\}$ must hold, decryption is feasible for the homomorphic ElGamal encryption scheme. The protocol requires roughly 2N rounds.

As the value of $x_N$ is statistically independent if at least $t=N/2$ honest players are able to complete the protocol successfully, the value of $x_N$ does not reveal any information on x.

The protocol can optionally be made robust. If a player $P_i$ fails in protocol stage 2, it is simply discarded in the remainder of the protocol. For stage 2, the joint decryption step is robust by definition. If the check $x_N \in \{-1,1\}$ fails, the players are required to broadcast a proof that $s_i \in \{-1,1\}$. The players who fail to provide a correct proof are discarded, and their $s_i$ values are decrypted. The value of $x_N$ is adjusted accordingly. Similarly, in stage 2, if player $P_i$ fails to complete its step, its value $s_i$ is decrypted and the encryption $[[s_i z_{i-1}]]$ is computed publicly.

This protocol is correct, sound, and computational zk.

In the second protocol implementation of the second embodiment, again the dichotomous domain is *{-1,1}* used but any different domain could be used instead using a linear mapping.

Let *[[x]], [[y]]* denote encryptions, with $x \in \{-1, 1\} \subseteq Z_q$ and $y \in Z_q$. The following protocol enables parties $P_1..P_n$, n > 1, to compute an encryption *[[xy]]* securely. For simplicity, it is assumed that these parties also share the private key of the *(t + 1; n)*-threshold scheme *[[.]]*, where *t < n*. The protocol consists of two phases.

Protocol phase 1. Let *x0 = x* and *y0 = y*. For i = *1..n*, party $P_i$ in turn takes $[[x_{i-1}]]$ and $[[y_{i-1}]]$ as input, and broadcasts a commitment $<<s_i>>$, with $s_i \in_R \{-1,1\}$. Then $P_i$ applies the private-multiplier multiplication protocol to multiplier $<<s_i>>$ and multiplicands $[[x_{i-1}]]$ and $[[y_{i-1}]]$, yielding random encryptions $[[x_i]]$ and $[[y_i]]$, where $x_i = s_i x_{i-1}$ and $y_i = s_i y_{i-1}$. If $P_i$ fails to complete this step successfully it is discarded immediately.

Protocol phase 2. The parties jointly decrypt $[[x_n]]$ to obtain $x_n$. If decryption fails because the number of correct shares is insufficient, the entire protocol is aborted. If decryption fails because $x_n \notin \{-1,1\}$, each party $P_i$ is required to broadcast a proof that $s_i \in \{-1,1\}$. Parties failing to do so are discarded, and the protocol is restarted (starting again at phase 1). Given $x_n$ and $[[y_n]]$, an encryption $[[x_n y_n]]$ is computed publicly. If all parties are honest, $x_n y_n = xy$.

Any party may disrupt the protocol for at most one run of phase 1 by picking a value $s_i$ outside the range $\{-1,1\}$. For $t < n/2$, the protocol is robust, allowing up to $t$ failing parties in total (as the threshold decryption step tolerates up to $t$ failing parties). For $n/2 \leq t < n$, the protocol is not robust, but the adversary does not get an advantage in this case.

The protocol requires a single threshold decryption only. Since $x_n$ is two-valued is required to hold, decryption is feasible for the homomorphic ElGamal encryption scheme. As the value of $x_n$ is statistically independent of $x$, the value of $x_n$ does not reveal any information on $x$.

If the total number of parties is large compared to the total number of conditional gates to be evaluated, an alternative way to guarantee robustness is to let the parties use encryptions $[[s_i]]$ instead of commitments $<<s_i>>$ in phase 1. Again, if $x_n \notin \{-1, 1\}$ in phase 2, all parties are required to prove that $s_i \in \{-1,1\}$. Failing parties are discarded and their si values are decrypted to correct the value of $x_n$.

The performance of the protocol is determined by the communication complexity (in bits) and the round complexity. In phase 1 each party applies the private-multiplier multiplication protocol, broadcasting about 10 values. For decryption each party broadcasts 3 values at the most. Hence, the communication complexity is $O(nk)$ where the hidden constant is very small. In general, the round complexity is $O(n)$, which is high, but in case of two-party computation it is $O(1)$. Also, when many conditional gates are to be evaluated in parallel, one may take advantage of the fact that the order in which parties $P_l..P_n$ execute phase 1 of the conditional gate protocol can be chosen arbitrarily.

As a first application of the conditional gate, xor-homomorphic ElGamal encryption scheme is shown. Given $[[x]]$ and $[[y]]$ with $x,y \in \{0,1\}$, $[[x \oplus y]]$ is computed as follows, using one threshold decryption:

- step 1: publicly convert $[[x]]$ to $[[x']]$ with $x' = 2x-1 \in \{-1,1\}$.
- step 2: apply the conditional gate to $[[x']]$ and $[[y]]$ to obtain $[[x'y]]$.
- step 3: publicly compute $[[x - x'y]]$, which is equal to $[[x \oplus y]]$.

The application of the conditional gate requires a threshold decryption, which seems unavoidable for achieving xor-homomorphic ElGamal encryption.

The work per party is very limited, about 13 exponentiations for each conditional gate. In contrast, the Mix and Match approach of according to the US patent mentioned would require each party to mix the 4 rows of a truth table for $x \oplus y$ in a verifiable way (Mix step, requiring 24 exponentiations for blinding the entries and, say, 6 x 12 exponentiations for the correctness proof (using the efficient protocol of J. Groth, "A verifiable secret shuffle of homomorphic encryptions, public key cryptography PKC'03, volume 2567 of Lecture Notes in Computer Science, pages 145-160, Berlin, 2003, Springer-Verlag) and perform on average 4 plaintext equality tests to find $[[x \oplus y]]$ given $[[x]]$ and $[[y]]$ (Match step, requiring 4 x 7 exponentiations). Hence, the conditional gate provides approximately a ten-fold improvement, counting exponentiations.

As a second application of the conditional gate, implementation of a logical gate is shown.

Any operator on two bits $x$ and $y$ can be expressed in a unique way as a polynomial of the form: $a_0 + a_1 x + a_2 y + a_3 xy$. The coefficients are not necessarily binary. For example, the exclusive-or operator $\oplus$ satisfies $x \oplus y = x + y - 2xy$. There are exactly 16 polynomials of type $\{0,1\}^2 \to \{0,1\}$, which is immediate if one considers the following normal form: $b_0 xy + b_1 x(1-y) + b_2(1-x)y + b_3(1-x)(1-y)$, where the coefficients are binary. In general, the coefficients need not be integers either, if one works with other two-valued domains such as $\{-1,1\}$.

In the following applications of the conditional gate, the special multiplication gate is applied to obtain efficient circuits for basic operations such as integer comparison and addition of binary represented numbers.

As a third application of the conditional gate, an efficient solution for a slight variant of Yao's millionaires problem is shown that allows extensions to more general situations. In this application, the inputs are given by their binary representations, i.e. $x=(x_{n-1},..., x_0)$ and $y=(y_{n-1},..., y_0)$ respectively. A multivariate polynomial $P$ over $Z$ is defined that implements the sign function.

Several polynomials can be used to implement this function. It appears that the most efficient solution can be constructed based on the following multivariate reduction polynomial: for $x,y \in \{0,1\}$, $F(s,x,y) = s + (1-s^2)(x-y)$. The polynomial $F$ can be efficiently evaluated by introducing an auxiliary variable $v=1-s^2$. Initially, $s=0$ and $v=1$. Then, the computation $s,v = s + v(x-y), v - v(x-y)^2$ is repeated for all components of x and $y,$ giving the desired result. The expression $v - v(x-y)^2$ can be computed as $v(1-x+2xy-y)$. In order to do this computation in a private way, three basic steps are required, where a player multiplies its $x$ or $y$ with a given homomorphic encryption.

- Player 1 computes $[[vx]]$ from $[[v]]$ and $((x))$.
- Player 2 computes $[[vy]]$ and $[[vxy]]$ from $[[v]]$ resp. $[[vx]]$ and $((y))$.
- Both players may compute $[[s+vx-vy]]$ (which is the new $s$).
- Both players may compute $[[v-vx+2vxy-vy]]$ (which is the new $v$).

If needed, $s$ can be decrypted using threshold decryption. Note that this algorithm needs three "multiplication with a private multiplier" protocols for each bit.

The second step in the algorithm can be performed efficiently. This approach can also be applied to the Socialist Millionaires problem to produce the result in encrypted form.

As a fourth application of the conditional gate, addition of two numbers is shown. To add two numbers $x,y$ given by their binary representation, the respective bits are added, also taking the carry into account. To produce the next bit of the output $z$, it is necessary to compute $[[t]] = [[x_i+y_i+c_{i-1}]]$, where $c_{i-1}$ is the carry value. It holds that $z_i=t \bmod 2$, and $c_i=\lfloor t/2\rfloor$. Computations are $z_i = x_i+y_i+c_{i-1} -2 x_iy_i -2 x_i c_{i-1} - 2y_i c_{i-1} + 4 x_iy_i c_{i-1}$ and $c_i = x_iy_i + x_ic_{i-1} + y_i c_{i-1} - 2 x_iy_ic_{i-1}$. If both $x$ and $y$ are private, all of these terms can be computed using the "simple" multiplication protocol. 4 such multiplications are needed for each bit. So, $O(n)$ in total, using n rounds. If only one is private, then one dichotomous multiplication is needed. If both are shared, the dichotomous multiplication is used all the time.

Similarly, multiplication of two numbers $x,y$ is achieved by the school method. This requires $O(n^2)$ bit multiplications.

As a fifth application of the conditional gate, computation of the Hamming distance is shown. Given two vectors $x$ and $y$ with entries in $Z_q$, the Hamming distance $d_H(x,y)$ between $x$ and $y$ is defined as

$$d_H(x,y)= \sum_{i=1}^{n} \delta\,(x_i-y_i),$$ where $\delta(x)=0$ if $x=0$ and $\delta(x)=1$

if $x\neq 0$. The goal of this section, is to compute securely the Hamming distance between $x$ and $y$ without revealing any further information about $x$ and $y$. More precisely, it is assumed that there are two players $P_1$ and $P_2$ each having a vector, say $x$ and $y$ respectively. They want to compute $d_H(x,y)$ by performing a two-party protocol. The $i$-th entry of the vector $x$ is denoted by $x_i\in Z_q$. he entries $x_i$ can be represented as binary strings through the following representation: $h=\delta\sum_{k=0}^{j} (x_k-y_k)^2$. The equality

tests are done using variable $h$.

At the end of the protocol $P_1$ and $P_2$ decrypt $h$.

Invariant in this protocol is $h=\delta\sum_{k=0}^{j} (x_k-y_k)^2$. In order

to compute $d_H(x,y)$, the above defined protocol has to be performed for every entry $x_i$, $y_i$ of the vectors $x$ and $y$. Denote the outcomes for the entry $i$ by $h_i$. Then,

$$[[d_H(x,y)]]=[[\sum_i h_i]]= \prod_i [[h_i]].$$ Then both

players decrypt together $[[d_H(x,y)]]$.

As a sixth application of the conditional gate, computation of the Euclidean distance is shown. The difference with the Hamming distance computation consists in the measure of similarity. For two vectors $x$ and $y$ of length $n$, the Euclidean distance $d_E(x,y)$ is defined as

$$d_E(x,y)= \sum_{i=1}^{n} (x_i-y_i)^2.$$ In order to compute $d_E(x,y)$ the players perform the following steps:

- Player 1 computes $[[x_i^2]]$ for all $i=1,...,n$ from its knowledge of the $x_i$. Similarly player 2 computes $[[y_i^2]]$ for all $i=1,...,n$.
- Both players compute $[[o_i]]=[[x_i^2-2x_iy_i+y_i^2]]$. Therefore player 1 sends $[[x_i]]$ to player 2 who can then compute $[[2x_iy_i]]$ (together with a proof that she used the correct $y_i$, i.e. the same one as she used in the computation of $y_i^2$.) Then they compute $[[x_i^2-2x_iy_i+y_i^2]]$.
- Finally, they compute $[[d_E(x,y)]]$ by making use of the homomorphic properties of the encryption scheme as follows,

$$[[d_E(x,y)]] = \prod_{i=1}^{n} [[o_i]] = [[\sum_{i=1}^{n} o_i]].$$

- By using fair threshold decryption, the result is obtained.

Again, the threshold version of this computation is considered, i.e. the case where one (or both) of the players only get the answer to the decision problem $d_E(x,y)> \mu$ for some threshold $\mu$. In that situation, both players have to use the binary representation of their inputs and compute in binary representation the values of the outcomes $[[o_i]]$. Then, they compute the binary representation of $\sum_{i=1}^{n} o_i$ by using the same methods as explained before. Then, they carry out the "Millionaires" protocol to obtain the encrypted result. Finally, they use fair threshold decryption to reveal the solution to both players.

As a seventh second application of the conditional gate, another well-known similarity measure for comparing two vectors is shown, the normalized scalar product, which is defined as

$$< x,y > = (\sum_{i=1}^{n} x_iy_i) / (\|x\| \|y\|)$$ where

$$\|x\|=\sqrt{(\sum_{i=1}^{n} x_i^2)}.$$ As the data $x,y$ are private, the numbers $1/\|x\|$ and $1/\|y\|$ can be computed privately by the respective players. The sum $[[\sum_{i=1}^{n} x_iy_i]]$ can be computed using the homomorphic properties of the El Gamal encryption scheme. Using the homomorphic properties once more, one obtains $< x,y >$. Finally, the value is obtained by applying (fair) threshold decryption and by extending the technique of P-A. Fouque, J. Stem, G-J. Wackers, "CryptoComputing with rationals", in Financial Cryptography, 2001, to deal with rational numbers to the El Gamal case.

In order to solve the associated decision problem, i.e. to decide whether $< x,y >> \mu$ for some well defined threshold $\mu$ all computations have to be done in the binary representation as explained before. Moreover as $0 \leq \mu \leq 1$, it looks favorable to solve the following associated decision problem:

$$(1/\mu) \sum_{i=1}^{n} x_i y_i \geq ||x|| \, ||y||.$$ Then the "Millionaires" protocol has to be applied. Finally, the result is obtained by applying (fair) threshold decryption.

In order to illustrate the wide applicability of the invention, an eight application of the conditional gate is shown: secure auctions.

An auction consists of two phases: a bidding phase during which the participants send their bids to the auctioneer, and an opening phase during which the auctioneer announces the highest price and the identity of the winner.

The following model is assumed. There are $m$ bidders, $P_1,..., P_m$. The bids are given by $x_1=(x_{1,n-1},..., x_{1,0})_2,..., x_m=(x_{m,n-1},..., x_{m,0})_2$. The representations are ordered from msb to lsb in this notation. The bidders encrypt their bids with the joint public key of the servers, and send those to the auctioneer; $[[x_i]]=[[x_{i,n-1}]],..., [[x_{i,1}]]$. There are $k$ servers. The method for highest price auctions will be described.

An algorithm for determining the identity of the highest bidder is presented. This algorithm is used by the servers to determine securely the highest bid and the identity of the highest bidder(s). Here fore, a set of $n+1$ selection vectors $w_i \in \{0,1\}^m, i=-1,..., n-1$ is defined that keep track of the identities of the highest bidder up to bit $i$ (starting from the msb). The algorithm starts with the vector $w_{n-1}$ and the identity of the highest bidder is contained in the vector $w_{-1}$. In order to give the dynamics that updates $w_i$ to $w_{i-1}$, a second set of vectors $t_i \in \{0,1\}^{m+1}$ $i=0,..., n-1$ is defined. The vectors $t_i$ check whether the vector $x_j w_i$ equals the zero vector. The $j$-th component of the vectors $w_i, t_i$ is denoted by $w_{j,i}, t_{j,i}$. The initial condition for the $t$ vectors is given by $t0_j=0$ for $j=0,..., n-1$ and for the $w$-vectors is given by $w_{n-1}=(1,...,1)$. The polynomials are defined by $F(s,z)=s+(1-s)z$ and $G_a(s,z)=s(z+(1-z)(1-a))$. The dynamics is then defined by the following updating rule: $t_{j,i}=F(t_{j-1,i}, x_{j,i}w_{j,i})$, $t_{m,i}=F(... F(F(t_{0i}, x_{1i}w_{1i}), x_{2i}w_{2i})...)$, and $w_{j,i-1} = G_{t_{m,t}} (w_{j,i}, x_{j,i})$, for $i=n-1,...,0$ starting with $i=n-1$ and for each $i$, the counter j runs from $1$ to $m$. Note that $t_{mi}=1$ means that at least one of the components of the vector $x_j w_j$ equals one. In order to compute the vector $w_{-1}$ securely, the servers use the generalized millionaires protocol based on the conditional gate.

When the vector $w_{-1}$ has been computed securely, the servers use fair threshold decryption to decrypt the entries of the vector $w_{-1}$. The identities of the winning bidders correspond to the positions of the entries

of $w_{-1}$ that are equal to one. Using this identifier, they can find the corresponding highest bid and use threshold decryption to decrypt it.

This protocol satisfies the same advantages as formulated by Juels and Jakobsson in US patent aforementioned, in particular it satisfies: non interactivity, auction adaptability, full privacy, robustness, multiple servers and public verifiability, while it avoids the relatively computationally expensive Mix computation.

This protocol can be extended to Vickrey (second-price) auctions. A Vickrey auction is an auction where the highest bidder wins but the clearing price, i.e. the price that the winner has to pay, is equal to the second highest bid. In order to perform a Vickrey auction, the following approach is possible. First the servers determine the identities of the winners (but not the winning bids) with the protocol given above. Then, they remove the winners and their bids from the list. Finally, they evaluate the following set of polynomials, $p_j=F(...F(F(0,x_{1,j}w_{1,j}),x_{mj}w_{m,j})$, for $j=n-1,...,0$ and where F is as defined above. The vector $p=(p_{n-1},..., p_0)$ contains then the maximum bid price.

Finally, two applications using the private-multiplier multiplication protocol are shown. The first application is the generalized millionaires problem.

In the millionaires problem, the respective inputs $x$ and $y$ are both private to the players. In many applications (e.g. secure profile matching), however, one or both of the inputs will be shared. If only one input is shared, say $x$, the multiplication can still be used with a private multiplier protocol at a few steps in the algorithms. For the millionaires algorithm this leads to $2n$ private multiplier protocols and $n$ dichotomous multiplication protocols. If both inputs are shared however, it is necessary to use the dichotomous multiplication protocol at all steps, giving $3n$ uses of the dichotomous multiplication protocols.

If one input is shared say $x$, and the other input is a known constant T, the following protocol is possible. Replace $y_j$ with $T_j$ for $j=0, ..., n-1$ and compute $\{[[x_j \cdot T_j]]\}$ for $j=0..n-1$ by using the homomorphic properties of the encryption scheme. In this way the problem is transformed into the inequality $x-T>0$. Then, only the computation of $[[v(x_j-T_j)]]$ has to be done with the dichotomous multiplication protocol (leading to n dichotomous multiplications).

As a second application, secure profile matching is shown.

In recent years, the availability to users of large amounts of content (audio, video, text, etc) in electronic form has called for the development of methods for information selection. Such methods are most commonly based on the idea of personalization, where information is selected for a given user according to the profile of preferences of that user. Such systems are generally known as recommended systems.

Collaborative filtering techniques are recommended systems in which the recommendation of content is based on the similarity between the profile of a given user and the profiles of other users (and not in the features of the content itself). If the measure of similarity between any two profiles is high enough (according to some pre-defined criterion), the system can recommend to one user the highly appreciated content items of the other user, which have not yet been seen by that first user.

Here this setting is extended to the ad-hoc case where two users can compare their profiles and find out whether they have a similar taste. If so, they might start a procedure to exchange content with each other. If not, the protocol guarantees that no other private information is leaked than the fact that the profiles are not similar.

By private comparison of two profiles, it is meant that the users compute securely a beforehand agreed test function. In a second phase they compare this (encrypted) value securely with a threshold; i.e. at the end of the protocol, the only knowledge the players get is whether the value of the test function exceeds the threshold or not.

The participants are assumed to have an authenticated channel with each other. For sake of clarity this description is restricted to the case where the private profiles of the users consist of binary vectors denoted as x and y but extensions to non-binary vectors are also possible.

A first measure for comparing two vectors is given by the number of entries in which they differ. This measure can be defined in terms of the Hamming distance $d_H(x,y)$ between two vectors $x,y \in \{0,1\}^n$ which is given by $d_H(x,y) = \sum_{i=1}^{n} \delta(x_i - y_i)$, where $\delta(x)=0$ if $x=0$ and $\delta(x)=1$ if $x \neq 0$. The second measure considered will be the scalar product defined as $d_S(x,y) = \sum_{i=1}^{n} x_i y_i$. The goal of this section is to show how $d_H(x,y)$ and $d_S(x,y)$ can be computed and compared to a threshold in a private way.

The private computation of $d_H(x,y)$ can be performed by running the private multiplier multiplication protocol and using threshold decryption to decrypt the result. The private computation of $d_S(x,y)$ is also based on the private multiplier multiplication protocol and the homomorphic properties of the ElGamal crypto system.

A more interesting situation arises when the decision problem $d_H(x,y) > \mu$ or $d_S(x,y) > \mu$ for a threshold $\mu$ chosen by one or both of the players has to be solved in a private way. It is assumed that $\mu$ is given in its binary representation $\mu_{n-1},..., \mu_0$. The next protocol solves the decision problem for $d_H(x,y)$, whereas the situation for $d_S(x,y)$ is completely analogous and the details are therefore omitted:

- First, the players set up a threshold ElGamal system using a key generation protocol.

- For each component $i=1,...,n$ both players compute securely $[[o_i]]=[[\delta(x_i y_i)]]$ using the "socialist" protocol of the section on the Millionaires problem or by computing $[[o_i]]=[[(x_i-y_i)^2]]$ using the private multiplier multiplication protocol.

- They compute privately the bit-representation of

$$[[s]]=[[\sum_{i=1}^{n} o_i]].$$

As a result the players obtain $([[s_{n-1}]],...,[[s_0]])_2$ ;

the binary representation of $[[\sum_{i=1}^{n} o_i]].$

- The players carry out the millionaires protocol on $[[s]]$ and $[[\mu]]$ to check whether $[[s]] \geq [[\mu]]$.
- Finally, they apply (fair) threshold decryption to decrypt the result of the decision problem.

This protocol requires $O(n \log n)$ exponentiations per player.

The previous approach can be extended to the case where the entries belong to a discrete (bit not binary) domain. The idea is the same but the computations require more steps and details. It is emphasized that also in that case, full privacy can guaranteed.

Fig. 2 Illustrates the device and computer program product for implementing the method according to the invention.

The device 200 comprises a memory 201, processing means 202, input means 203, and output means 204, being arranged to implement the method according to the invention.

A computer program product 210 may carry instructions that, when loaded, cause a programmable device in device 200 to execute the steps necessary to implement the method according to the invention.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. A single processor or other (programmable) unit may also fulfill the functions of several means recited in the claims.

In the device claim enumerating several means, several of these means can be embodied by one and the same item of hardware. The mere fact that certain measures are recited in mutually different dependent claims does not indicate that a combination of these measures cannot be used to advantage.

## Claims

1. A method for a party participating in a secure multi-party multiplication protocol between participants, the protocol being arranged to compute the product of private first data and encrypted second data, wherein the protocol comprises a sub-protocol comprising the steps of

   - the party (100) obtaining first data (101)
   - the party obtaining encrypted second data (102),
   - the party computing encrypted output data (103) which comprises a randomized encryption of the product of the first data and the second data, using a discrete log based cryptosystem, and
   - the party generating a proof (104) being arranged to show that the encrypted output data is correct;

   **characterize in that**
   the first data comprising at least one of: private first data x, encrypted first data $[[x]] = (a, b) = (g^r, g^x h^r)$, or a Pederson commitment $<<x>> = g^x h'^r$, and the encrypted second data is denoted by $[[y]] = (c, d)$; wherein the party knows $r$ and $x$ with g, h, h' E G, G denoting a group of prime order q, r E $Z_q$; and the step of the party computing encrypted output data comprises the party computing the randomized encryption $[[xy]] = (e, f) = (g^s, h^s) * [[y]]^x$, with $s$ being randomly chosen from $Z_q$, using the homomorphic properties of the discrete log based cryptosystem.

2. Method according to claim 1, enabling parties $P_1, ... , PN, N \geq 2$, to compute the encryption $[[xy]]$ securely, where $x \in \{-1,1\}$, comprising for party $P_i$, i = 1.. N:

   receiving $[[x_{i-1}]]$ as input from party $P_{i-1}$ and choosing $s_i$ randomly from $\{-1,1\}$; broadcasting encryptions $[[s_i]]$ and $[[s_i x_{i-1}]]$, and a proof that $[[s_i x_{i-1}]]$ is correct with respect to $[[s_i]]$ and $[[x_{i-1}]]$, using the sub-protocol; letting $x_i = s_i x_{i-1}$; receiving $[[x_N]]$ from party $P_N$; decrypting $[[x_N]]$ to obtain $x_N$; checking that $x_N \in \{-1,1\}$; publicly computing an encryption $[[x_N y]]$; letting $z_0 = x_N y$; receiving $[[z_{i-1}]]$ as input from party $P_{i-1}$ and broadcasting an encryption $[[s_i z_{i-1}]]$, and a proof that $[[s_i z_{i-1}]]$ is correct with respect to $[[s_i]]$ and $[[z_{i-1}]]$, using the sub-protocol; letting $z_i = s_i z_{i-1}$; and receiving $[[z_N]] = [[xy]]$ from party $P_N$.

3. Method according to claim 1, enabling parties $P_1, ... , P_N, N \geq 2$, to compute the encryption $[[xy]]$ securely, where $x \in \{-1,1\}$, comprising for party $P_i$, i = 1.. N:

   letting $x_0 = x$ and $y_0 = y$; taking $[[x_{i-1}]]$ and $[[y_{i-1}]]$ as input from party $P_{i-1}$, and broadcasting a commitment $<<s_i>>$, with $s_i$ randomly chosen from $\{-1, 1\}$; applying the sub-protocol to multiplier $<<s_i>>$ and multiplicands $[[x_{i-1}]]$ and $[[y_{i-1}]]$, yielding random encryptions $[[x_i]]$ and $[[y_i]]$, where $x_i = s_i x_{i-1}$ and $y_i = s_i y_{i-1}$; the parties jointly decrypting $[[x_N]]$ to obtain $x_N$; given $x_N$ and $[[y_N]]$, publicly computing an encryption $[[x_N y_N]]$; wherein $[[x_N y_N]] = [[xy]]$.

4. Method according to claim 1, wherein the first data is random data from a two-valued domain.

5. Method according to claim 1, wherein the discrete log based cryptosystem is the ElGamal cryptosystem.

6. The method according to claim 1, wherein the encrypted data are Pederson commitments.

7. The method according to claim 1, wherein the protocol further comprises the further step of the party transmitting the proof to at least one of the other participants.

8. The method according to claim 1, wherein the protocol comprises the further step of the party transmitting the encrypted output data to at least one of the other participants.

9. The method according to claim 1, wherein the protocol is executed between two parties.

10. A device (200) being arranged for implementing the method according to claim 1.

11. A computer program product (210), for enabling multiparty computations, having computer executable instructions for causing a programmable device to perform the method according to claim 1.

## Patentansprüche

1. Verfahren, nach dem ein Teilnehmer sich an einem sicheren Mehrteilnehmer-Multiplikationsprotokoll zwischen Teilnehmern beteiligt, wobei das Protokoll dazu vorgesehen ist, wobei das Protokoll zum Berechnen des Produktes aus privaten ersten Daten und verschlüsselten zweiten Daten vorgesehen ist, wobei das Protokoll ein Subprotokoll aufweist, dass die nachfolgenden Schritte umfasst;

- der Teilnehmer (100) empfängt die ersten Daten (101);

- der Teilnehmer empfängt verschlüsselte zweite Daten (102);

- der Teilnehmer berechnet verschlüsselte Ausgangsdaten (103), was eine beliebige Verschlüsselung des Produktes aus den ersten Daten und den zweiten Daten umfasst, wobei ein diskretes log-basiertes Verschlüsselungssystem angewandt wird, und

- der Teilnehmer erzeugt einen Nachweis (104), vorgesehen um anzugeben, dass die verschlüsselten Ausgangsdaten einwandfrei sind;

**dadurch gekennzeichnet, dass**

die ersten Daten wenigstens Folgendes enthalten: private erste Daten x, verschlüsselte erste Daten $[[x]] = (a, b) = (g^r, g^x h^r)$, oder eine Pederson Verbindlichkeit $\ll x \gg = g^x h'^r$, und die verschlüsselten zweiten Daten werden durch $[[y]] = (c, d)$ bezeichnet; wobei der Teilnehmer r und x kennt, mit g, h, h', E, G; wobei G eine Gruppe erster Ordnung q, r, E, $Z_q$ bezeichnet, und

der Schritt, dass der Teilnehmer verschlüsselte Ausgangsdaten berechnet, umfasst, dass der Teilnehmer die beliebige Verschlüsselung berechnet: $[[xy]] = (e, f) = g^s$, $h^s) * [[y]]^x$, wobei s aus $Z_q$ beliebig gewählt wird, und zwar unter Anwendung der homomorphen Eigenschaften des diskreten log-basierten Verschlüsselungssystem.

2. Verfahren nach Anspruch 1, wodurch es ermöglicht wird, dass Teilnehmer $P_1$, ..., $P_N$, $N \geq 2$ die Verschlüsselung $[[xy]]$ auf sichere Art und Weise berechnen, wobei $x \in \{-1,1\}$ ist, für den Teilnehmer $P_i$, i = 1...N;

wobei $[[x_{i-1}]]$ als Eingang von dem Teilnehmer $P_{i-1}$ empfangen wird, und $s_i$ beliebig aus $\{-1, 1\}$ gewählt wird; wobei Verschlüsselungen $[[s_i]]$ und $[[s_i x_{i-1}]]$ gesendet wird, und einen Nachweis, dass $[[s_i x_{i-1}]]$ gegenüber $[[s_i]]$ und $[[x_{i-1}]]$ einwandfrei ist, wobei das Subprotokoll angewandt wird, wobei vorausgesetzt wird, dass $x_i = s_i x_{i-1}$ ist;

wobei $[[x_N]]$ von dem Teilnehmer $P_N$ empfangen wird; wobei $[[x_N]]$ entschlüsselt wird, und zwar zum Erhalten von $x_N$; wobei überprüft wird, ob $x_N \in \{-1,1\}$ ist; wobei öffentlich eine Verschlüsselung $[[x_N y]]$ berechnet wird; wobei vorausgesetzt wird, dass $z_0 = x_N y$ ist;

wobei $[[z_{-1}]]$ als Eingang von dem Teilnehmer $P_{i-1}$ empfangen wird und eine Verschlüsselung $[[s_i z_{i-1}]]$ gesendet wird, und ein Nachweis, dass $[[s_i z_{i-1}]]$ gegenüber $[[s_i]]$ und $[[z_{i-1}]]$ einwandfrei ist, und zwar unter Anwendung des Subprotokolls; wobei vorausgesetzt wird, dass $z_i = s_i z_{i-1}$ ist; und wobei $[[z_N]] = [[xy]]$ von dem Teilnehmer $P_N$ empfangen wird.

3. Verfahren nach Anspruch 1, wodurch es ermöglicht wird, dass Teilnehmer $P_1,...P_N$, wobei $N \geq 2$ ist, die Verschlüsselung $[[xy]]$ auf sichere Art und Weise berechnen,

wobei $x \in \{-1,1\}$ ist, mit für den Teilnehmer $P_i$, wobei i = 1 .. N;

wobei vorausgesetzt wird, dass $x_0 = x$ und $y_0 = y$ ist; wobei $[[x_{i-1}]]$ und $[[y_{i-1}]]$ als Eingang von dem Teilnehmer $P_{i-1}$ genommen wird, und dass eine Verbindlichkeit $\ll s_i \gg$ gesendet wird, wobei $s_i$ auf beliebige Art und Weise aus $\{-1,1\}$ gewählt wird; wobei das Subprotokoll auf den Multiplizierer $\ll s_i \gg$ und die Multiplikanden $[[x_{i-1}]]$ und $[[y_{i-1}]]$ angewandt wird, was beliebige Verschlüsselungen $[[x_i]]$ und $[[y_i]]$ ergibt, wobei $x_i = s_i x_{i-1}$ und $y_i = s_i y_{i-1}$ ist;

wobei die Teilnehmer gemeinsam $[[x_N]]$ verschlüsseln, und zwar zum Erhalten von $x_N$; was $x_N$ und $[[y_N]]$ ergibt, wobei öffentlich eine Verschlüsselung $[[x_N y_N]]$ berechnet wird; wobei $[[x_N y_N]] = [[xy]]$ ist.

4. Verfahren nach Anspruch 1, wobei die ersten Daten beliebige Daten aus einer zweiwertigen Domäne sind.

5. Verfahren nach Anspruch 1, wobei das diskrete log-basierte Verschlüsselungssystem das ElGamal Verschlüsselungssystem ist.

6. Verfahren nach Anspruch 1, wobei die verschlüsselten Daten Pederson Verbindlichkeiten sind.

7. Verfahren nach Anspruch 1, wobei das Protokoll weiterhin den weiteren Schritt umfasst, wobei der Teilnehmer den Nachweis zu wenigstens einem der anderen Teilnehmer überträgt.

8. Verfahren nach Anspruch 1, wobei das Protokoll den weiteren Schritt umfasst, dass der Teilnehmer die verschlüsselten Ausgangsdaten zu wenigstens einem der anderen Teilnehmer überträgt.

9. Verfahren nach Anspruch 1, wobei das Protokoll zwischen zwei Teilnehmern durchgeführt wird.

10. Anordnung (200), vorgesehen zum Implementieren des Verfahrens nach Anspruch 1.

11. Computerprogrammprodukt (210), um Mehrteilnehmer-Berechnungen zu ermöglichen mit vom Computer durchführbaren Instruktionen um dafür zu sorgen, dass eine programmierbare Anordnung das Verfahren nach Anspruch 1 durchführt.

**Revendications**

1. Procédé pour une partie participant à un protocole solide de multiplication multipartite entre des participants, le protocole étant agencé de manière à calculer le produit de premières données privées et de deuxièmes données chiffrées, dans lequel le protocole comprend un sous-protocole comprenant les étapes suivantes de:

- la partie (100) obtenant des premières données (101),
- la partie obtenant des deuxièmes données chiffrées (102),
- la partie calculant des données de sortie chiffrées (103) qui comprennent un chiffrage randomisé du produit des premières données et des deuxièmes données, utilisant un système cryptographique discret basé sur des logarithmes, et
- la partie générant une preuve (104) étant agencée de manière à montrer que les données de sortie chiffrées sont correctes;

**caractérisé en ce que**

les premières données comprenant au moins une des premières données x, des premières données chiffrées $[[x]] = (a, b) = (g^r, g^x h^r)$ ou un engagement de Pederson $<<x>> = g^r h'^r$ et les deuxièmes données chiffrées sont indiquées par $[[y]] = (c, d)$ où la partie connaît et $x$ avec g, $h'$, $h' \in G$, $G$ indiquant un groupe d'ordre principal $q$, $r \in Z$ $q$, et

l'étape de la partie calculant les données de sortie chiffrées comprend la partie calculant le chiffrage randomisé $[[xy]] = (e,f) = (g^s, h^s) * [[y]]^x$, $s$ étant choisi au hasard parmi $Z_q$ à l'aide des propriétés homomorphes du système cryptographique discret basé sur des logarithmes.

2. Procédé selon la revendication 1, permettant aux parties $P_1, ... , P_N$ $N \geq 2$ de calculer solidement le chiffrage $[[xy]]$ où $x \in \{-1,1\}$ comprenant pour la partie $P$, $i = 1 .. N$:

recevant $[[x_{i-1}]]$ en tant qu'entrée de la partie $P_{i-1}$ et choisissant $s_i$ au hasard parmi $\{-1,1\}$; diffusant des chiffrages $[[s_i]]$ et $[[s_1 \ x_{i-1}]]$, et une preuve que $[[s_i \ x_{i-1}]]$ est correct par rapport à $[[s_i]]$ et $[[x_{i-1}]]$, utilisant le sous-protocole; *laissant $x_i = s_i \ x_{i-1}$*;

recevant $[[x_N]]$ de la partie $P_N$; déchiffrant $[[x_N]]$ pour obtenir $X_N$; vérifiant $x_N \in \{-1,1\}$; calculant publiquement un chiffrage $[[x_N \ y]]$; laissant $z_0 = x_N \ y$;

recevant $[[z_{i-1}]]$ en tant qu'entrée de la partie $P_{i-1}$ et diffusant un chiffrage $[[s_i \ z_{i-1}]]$ et une preuve que $[[s_i \ z_{i-1}]]$ est correct par rapport à $[[s_i]]$ et $[[z_{i-1}]]$, utilisant le sous-protocole; laissant $z_i = s_i \ z_{i-1}$; et

recevant $[[z_N]] = [[xy]]$ de la partie $P_N$.

3. Procédé selon la revendication 1, permettant aux parties $P_1, ... , P_N$, $N \geq 2$ de calculer solidement le chiffrage $[[xy]]$ où $x \in \{-1,1\}$ comprenant pour la partie P, $i = 1 .. N$:

laissant $x_0 = x$ et $y_0 = y$; prenant $[[x_{i-1}]]$ en tant qu'entrée de la partie $P_{i-1}$ et diffusant un engagement $<<s_i>>$, $s_i$ étant choisi au hasard parmi $\{-1,1\}$; appliquant le sous-protocole à un multiplicateur $<<s_i>>$ et à des multiplicandes $[[x_{i-1}]]$ et $[[y_{i-1}]]$, produisant des chiffrages aléatoires $[[x_i]]$ et $[[y_i]]$ où $x_i = s_i x_{i-1}$ et $y_i = s_i \ y_{i-1}$;

les parties déchiffrant conjointement $[[x_N]]$ pour obtenir $x_N$; étant donnés $x_N$ et $[[y_N]]$, calculant publiquement un chiffrage $[[x_N y_N]]$ dans lequel $[[x_N y_N]] = [[xy]]$.

4. Procédé selon la revendication 1, dans lequel les premières données sont des données aléatoires en provenance d'un domaine de deux valeurs.

5. Procédé selon la revendication 1, dans lequel le système cryptographique discret basé sur des logarithmes est le système cryptographique d'ElGamal.

6. Procédé selon la revendication 1, dans lequel les données chiffrées sont des engagements de Pederson.

7. Procédé selon la revendication 1, dans lequel le protocole comprend encore la nouvelle autre étape de la partie transmettant la preuve à au moins un des autres participants.

8. Procédé selon la revendication 1, dans lequel le protocole comprend la nouvelle autre étape de la partie transmettant les données de sortie chiffrées à au moins un des autres participants.

9. Procédé selon la revendication 1, dans lequel le protocole est exécuté entre deux parties.

10. Dispositif (200) étant agencé de manière à mettre en oeuvre le procédé selon la revendication 1.

11. Produit de programme informatique (210) pour permettre des calculs multipartites, ayant des instructions exécutables d'ordinateur pour effectuer qu'un dispositif programmable met en oeuvre le procédé selon la revendication 1.

EP 1 683 298 B1

101    102

100                104

103    FIG.1

210

200

201    202

203    204    FIG.2

13

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6772339 B

- WO 0120562 A2

**Non-patent literature cited in the description**

- **CRAMER et al.** Multiparty computation from threshold homomorphic encryption. *Basic Research in Computer Science,* 2000, 1-38
- A verifiable secret shuffle of homomorphic encryptions, public key cryptography PKC'03. **J. GROTH.** Lecture Notes in Computer Science. Springer-Verlag, 2003, vol. 2567, 145-160

- **P-A. FOUQUE ; J. STEM ; G-J. WACKERS.** CryptoComputing with rationals. *Financial Cryptography,* 2001